Europäisches Patentamt

European Patent Office

Office européen des brevets

(19)

(11) Publication number: **0 009 684**

**B1**

(12) **EUROPEAN PATENT SPECIFICATION**

(45) Date of publication of patent specification: **06.03.85**

(21) Application number: **79103418.4**

(22) Date of filing: **12.09.79**

(51) Int. Cl.⁴: **H 04 M 3/42,** H 04 M 15/06, H 04 M 1/02, H 04 Q 3/00

(54) **A telephone-switching system.**

(30) Priority: **15.09.78 CA 311422**

(43) Date of publication of application: **16.04.80 Bulletin 80/08**

(45) Publication of the grant of the patent: **06.03.85 Bulletin 85/10**

(84) Designated Contracting States: **AT BE CH DE FR GB IT LU NL SE**

(56) References cited:
**DE-A-2 533 699**
**FR-A-2 315 250**
**FR-A-2 349 899**
**US-A-1 912 376**
**US-A-2 168 310**
**US-A-2 436 431**
**US-A-3 022 381**
**US-A-3 959 607**

(73) Proprietor: **Szwarcbier, Gabriela Via Belvedere 12 I-21016 Luino (IT)**

(72) The inventor has agreed to waive his entitlement to designation

(74) Representative: **Villinger, Franz, Dipl.-Ing. Hohenstaufenstrasse 16 D-7321 Börtlingen über Göppingen (DE)**

Courier Press, Leamington Spa, England.

## Description

Specifically, the problem solved herein is to provide subscribers in a telephone network with a switching system with a large plurality of extension points. Via each of these extension points hereinafter referred to as connection points, they can gain access to their own ordinary telephone exchange line which is associated with a regular telephone instrument which each subscriber possesses as a residential or commercial telephone. If a person does not have such an ordinary telephone exchange line connected to his own residential or commercial telephone, then the telephone system would dedicate an ordinary exchange line to him, without the necessity of the subscriber having a regular telephone. Then he can make any local or long distance calls he desires and his calls will be recorded automatically. If the subscriber has an ordinary telephone exchange line which is connected to the exchange, he will be able to telephone by way of his ordinary telephone exchange line. In this case an additional register device is superfluous, because his ordinary telephone exchange line is already controlled by a known charge indicator. In the case of a subscriber who makes a telephone call by means other than his residential or commercial ordinary telephone exchange line, each public telephone instrument within a given area will constitute an extension of the subscriber's own telephone or dedicated ordinary telephone exchange line.

This system creates an astonishing new effect. It allows a person to have a mobile extension of his own telephone wherever he goes, and if he is a movable type of a subscriber he changes himself into a regular, conventional subscriber when he plugs his telephone instrument into one of the connection points.

From the point of view of the telephone company, this would reduce the number of, or completely eliminate, the public telephone boxes and the problems associated therewith. Since a subscriber effectively would use his ordinary telephone exchange line when he places calls via the telephone system according to the invention, the problem of recording the charging of long distance telephone calls is substantially reduced.

Existing ten-digit telephone dials or keyboards may be used both for selecting a confidential number or sign and for selecting a subscriber's telephone number. But also other impulse giving instruments as f.i. dials or keyboards with a greater number of different impulses or other identification means can be used in connection with the new telephone switching system.

The connection points may comprise a jack and the telephone instruments may be a portable telephone instrument equipped with at least one keyboard or dial and adapted to be plugged into a jack for connection with the telephone exchange.

The portable telephone may be incorporated in a car and have a connection cable wound upon a drum in such a manner that it can be plugged into any one of said connection points.

General Description

The invention relates to a telephone switching system for connecting a movable telephone instrument (A, B, C) of a telephone network subscriber at any selected one of a plurality of connection points to his telephone exchange through an ordinary telephone exchange line, each of said connection points being disposed remote from every other connection point and remote from the position of his ordinary residential or commercial telephone instrument, wherein said telephone switching system comprises:

an ordinary telephone exchange line dedicated to the subscriber,

at least one movable telephone instrument in possession of the said subscriber fitted with a plug suitable for attachment to a plug socket at the connection points,

means arranged at said movable telephone instrument as well as in said telephone exchange to effect connection between any one of said connection points with the said dedicated ordinary exchange line of the subscriber in response to the transmission of a secret sign dedicated to the subscriber.

whereby said movable telephone instrument plugged into a socket of any one of the connection points becomes an extension to the said dedicated ordinary telephone exchange line of the subscriber.

Further the invention relates to a telephone switching system as described above, modified in that the subscriber possesses only a movable telephone instrument — without a residential or commercial telephone instrument — but nevertheless with a dedicated personal telephone exchange line in a local telephone network.

The expression "ordinary telephone exchange line" is meant to include the line which is found between the telephone network and a residential or commercial telephone or a line which has been dedicated or assigned to a person who does not have a residential or commercial telephone. It is further understood that the connection points connect to the ordinary telephone exchange lines through the new switching system and thence to the central exchange.

The invention contemplates a switching system which can, upon presentation of a valid and verified secret sign, it being understood that a secret sign may consist of a combination of numbers or a combination of letters of the alphabet or both, connect any one of a plurality of connection points, through the switching system, to the ordinary telephone exchange line dedicated to the subscriber, to place, with the aid of a telephone instrument appropiately associated with an impulse sender, local or long distance calls from any one of a plurality of remote connection points connected through an appropriated switching system into the central telephone exchange without the necessity of coins or assistance from an operator, by dialing, with said telephone instrument a secret sign or by generating a secret sign with magnetic tapes, or phonograph records and the like, thus allowing connection from said connection point, through said switching system, to his own particular ordinary telephone exchange line in the central exchange, thence through said central exchange to complete his call.

A person, desiring to avail himself of said telephone switch system when in an area remote from his own exchange, can request the telephone company or post office in the said remote area to accept his secret sign for said switching system, whereafter he can then telephone anywhere he desires to from the remote area and the bills for the calls will be sent either to his address or to his own exchange.

Description of the Prior Art

It has hitherto been customary for a person wishing to call someone from a public coin telephone to pay for the call immediately by inserting coins. There are present coin telephones which can be used only by inserting coins and coin telephones which can be used by inserting coins and with operator assistance. In this case of telephones which can be operated only by inserting coins, the disadvantage is that the caller must have a large supply of coins, and this is not usually the case. It is often impossible for the caller to complete his call because he has no more loose change. In the case of coin telephones which can be operated by inserting coins and with operator assistance, there are other disadvantages, since calls are made as follows: at the operator's request, the caller inserts enough money for the first three minutes, the insertion of the coins producing audio signals which enable the operator to check the amount paid. A line to the exchange is then made available by the operator, and the caller obtains the desired connection by dialing. The duration of the call is monitored by the operator. Unless additional coins are inserted after three minutes, the connection is broken.

The equipment outlined above, and the method of making calls, are cumbersome and have disadvantages. In order to accept the coins when a call is completed, or return them to the caller when a call is not completed, highly complex equipment, including coin checkers, coin ducts, contacts, relays and receptacles for the coins accepted, must be incorporated into the instrument. This makes the instruments expensive and less reliable, and such coin telephones are susceptible to thieves, burglars and vagrants, all attracted by the money in the coin boxes. Counterfeiters are always attempting to use counterfeit coins, circular washers, or less valuable coins of other currencies, to operate coin telephones. A large staff is required for maintenance purposes and to empty the coin boxes and later to count the money.

On the other hand, the prior art teaches some telephone systems for connecting a telephone instrument to an ordinary telphone exchange line, which ordinary telephone exchange line would be connected to a public telephone exchange, such as a local exchange or a central exchange, through a switching system. The switching system normally disconnects a connection point, at which the telephone instrument is connected, from the ordinary telephone exchange line. Upon presentation of a verifiable code, the switching system connects the telephone instrument at the connection point to the ordinary exchange line whereupon the telephone instrument is connected to the public exchange. One system of this kind is described in French demand de brevet d'invention Nr. 76 12925, Edouvard de Crepy et al, Nov. 25, 1977. This application describes only a device which gives the possibility for using any service or purchasing any thing with help of an automaton on credit, that means without cash payment. Only as one sample for such device is described the use of a telephone automaton. The device is therefore connected with an ordinary telephone apparatus 2 (est associé a un post téléphonique ordinare 2!) and gives free a telephone exchange line a, b (la ligne téléphonique reseau 2) only after testing the authorisation of the user by help of a very complex apparatus. Out of that reference the idea of the invention could not be derived. Another system is described in U.S. Patent 3,959,607, VARGO, issued May 25, 1976. That invention relates to a "Communication booth with automatic accounting for telephone and booth usage". This is a new telephone booth with an expensive equipment and the invention described in the reference has the purpose to give free the entrance to the booth and usage of its equipment by help of a credit card. (A computer 33 compares the information from the card with the memory information and determines if the user is entitled to entry!).

Not any of the publications nominated before does teach a telephone system wherein a subscriber to a telephone network can use public telephones — also in a very much simplified execution — as outlets fitted with a plug socket in connection with a movable telephone apparatus — correspondingly executed — as extensions of his ordinary telephone exchange line either associated with his residential or commercial telephone or another dedicated to him ordinary telephone exchange line. In addition, it is not known that any other prior art publication addresses itself to this problem.

Thus, from the point of view of the subscriber, the flexibility of his own telephone instrument is greatly increased in that he has a large number of extensions which may be dispersed at various locations throughout a municipal area or the like. With the new telephone system, the subscriber no longer has to be at his home or office to use his telephone line. Instead, as mentioned above, he can be at a plurality of dispersed locations. He will no longer have to use coins or operator assistance in public telephone boxes for making either local or long distance telephone calls.

From the point of view of the telephone company, this could reduce the number of, or completely eliminate, the public telephone boxes and the problems associated therewith. Since a subscriber effectively would use his own ordinary telephone exchange line when he places calls with the telephone system according to the invention, the problem of recording the charging of long distance telephone calls is substantially reduced when, for example, compared to the present system of credit card long distance telephone calls, which entails the assistance of an operator.

It is also proposed that there be provided a stationary telephone instrument which is provided with means such as a key board or similar means having digits 1 through 9 and zero and a socket for receiving another impulse generator in a separate housing, having a plug designed to fit into the jack-socket, and which would be carried by subscribers and when they desire to make a call, they would merely insert the plug into the jack-socket. These sockets constitute the connection points. Thus only authorized subscribers would be able to "dial" the telephone instrument so that tampering, or trying to find a secret sign by unauthorized persons would be prevented.

The proposed telephone system, and the proposed connection points and telephone instruments would provide considerable advantages for the users and the telephone company or post office. Workmen, employees, or representatives, who frequently have occasion to communicate with their offices, would be better able to do so. Travellers wishing to communicate with their families or acquaintances would be able to effect their calls from videly distributed connection points. It would be easy to summon help in the event of car breakdown and emergencies.

Great advantages are foreseen for the telephone company or the post office from the proposed invention. The proposed public telephone instrument will be of simple construction and, therefore, it will be much less expensive than the present coin telephone. Because there are no coin devices, breakdowns due to coins or coin devices will be eliminated and the maintenance in general will be greatly reduced. Because the connection points will be of simple construction and will not necessarily be equipped with a telephone apparatus, it will be possible to extend the telephone network at minimal costs. Because of many advantages for the subscribers from the new invention, many people will purchase the portable telephone instruments, thus increasing the telephone company or post office revenues.

Because the telephone network will be extended and broadened and the subscribers will be able to place telephone calls without the aid of coins or an operator, people will be encouraged to make many more calls, and the telephone company or post office revenues will also therefore be correspondingly increased.

The switching system preferably comprises a computer, which may be part of the telephone exchange.

The pulse generators may be activated by dials, keyboards, photoelectric cells, electron beams, magnetic tapes, or phonograph records.

The pulse generators may be accommodated in a separate housing and may be provided with means which allows it to be plugged into the telephone instrument, the separate housing including a keyboard for initiating the generator. Preferably, the telephone instrument has means for connecting the pulse generator into the telephone instrument. The pulse generator may be accommodated in a separate housing connected with a respective telephone instrument, the separate housing including a keyboard for initiating the generator.

Existing ten-digit telephone dials or keyboards may be used both for selecting the secret sign or for selecting a subscriber's telephone number.

The connection points may comprise a jack and the telephone instruments may be a portable telephone instrument equipped with at least one keyboard and adapted to be plugged into the jack for connection with the telephone exchange.

The portable telephone may be incorporated in a car and may have a connecting cable would upon a drum in such a manner that it can be plugged into any of said connection points. In connection with another embodiment of the invention, the switching system can be found in the telephone exchange to form therewith an integral part of the exchange.

Brief Description of the Drawings

The invention will be better understood by an examination of the following description together with the accompanying drawings in which:

Figure 1 is a block diagram of a system in accordance with the invention.

Figure 2 illustrates how the system handles subscribers, which do not have a telephone at home or in an office.

Figure 3 illustrates one embodiment of the switching system.

Figure 4 is a schematic illustration of Figure 3 showing two examples of secret word passages.

Figure 5 shows a telephone instrument having two dials.

Figure 6 shows a telephone instrument having a keyboard bearing the usual numbers and a second keyboard with 24 letters of the alphabet arranged in four rows.

Figure 7 shows the same telephone instrument as in Figure 6, but with the 24 letters arranged in three rows.

Figure 8 shows a telephone instrument having a keyboard for the numbers for 1 to 9 and zero, and a socket for a keyboard with letters, or some other pulse generator.

Figure 9 shows a keyboard in a separate housing with 24 letters.

Figure 10 shows a table telephone of known design connected to a keyboard to dial a secret sign.

Figure 11 illustrates a portable telephone instrument useful with the inventive system.

Figure 12 illustrates a jack which can constitute a connection point in a system in accordance with the invention.

Figures 13 and 14 illustrate an automobile telephone instrument arrangement useful in a system in accordance with the invention.

Description of Preferred Embodiments

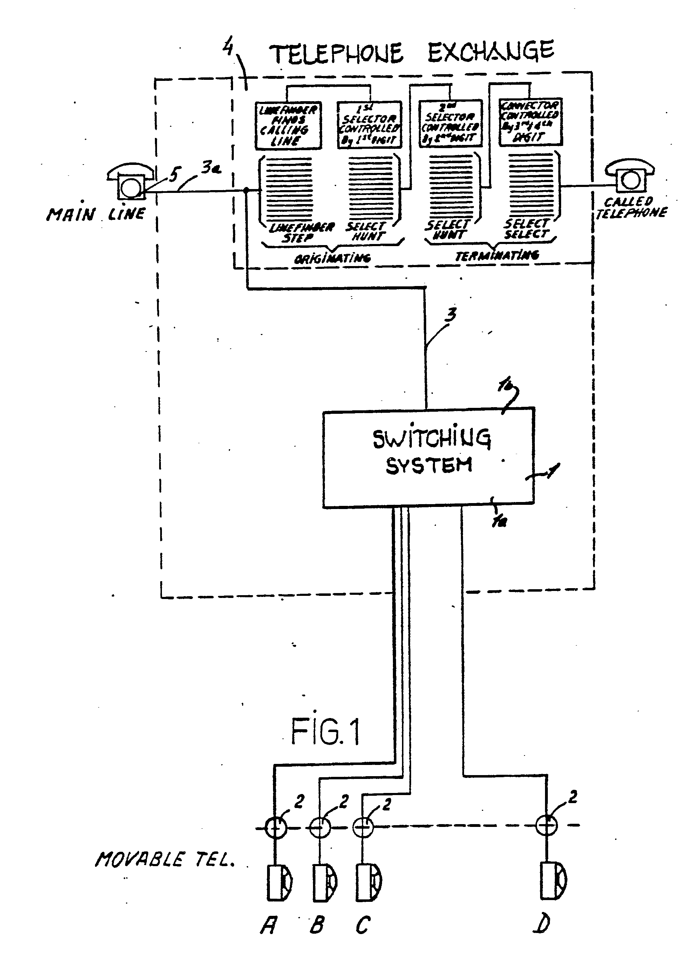

Referring to Figure 1, the telephone system includes a switching system 1 having a user input side 1a and an output side 1b. Connected to the input side 1a are a plurality of connection points 2 in which movable telephone instruments A,B,C, & D can be inserted. From the output side 1b of the switching system 1 leads an ordinary exchange line 3 into the telephone exchange 4. The ordinary exchange line 3 is connected with an ordinary exchange line 3a of a stationary arranged telephone instrument 5 dedicated to an ordinary subscriber. By dialing of a secret sign with help of a dial, keyboard or any other kind of impulse generator, which is arranged at a movable telephone instrument A,B,C or D, the connection between a connection point 2 with the ordinary exchange line 3 can be established. Subsequently, by dialing of the elephone number, any one telephone connection can be established. The movable telephone instruments A,B,C & D are then extensions to the ordinary exchange line 3a of the subscriber.

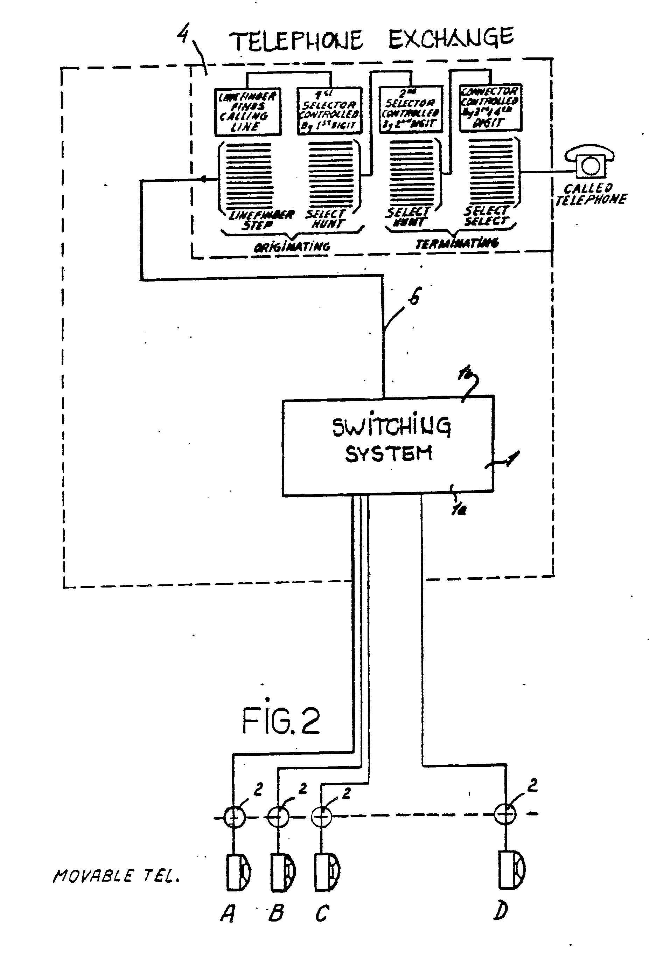

Figure 2 differs from Figure 1 only in that it relates to a subscriber who does not have a residential or commercial telephone instrument but to whom is dedicated a personal ordinary telephone exchange line 6 within a local telephone exchange 4. Such subscriber can also dial a connection to any one subscriber from each connection point 2 by use of a movable telephone instrument A,B,C or D through his ordinary exchange line 6 after input of his secret sign.

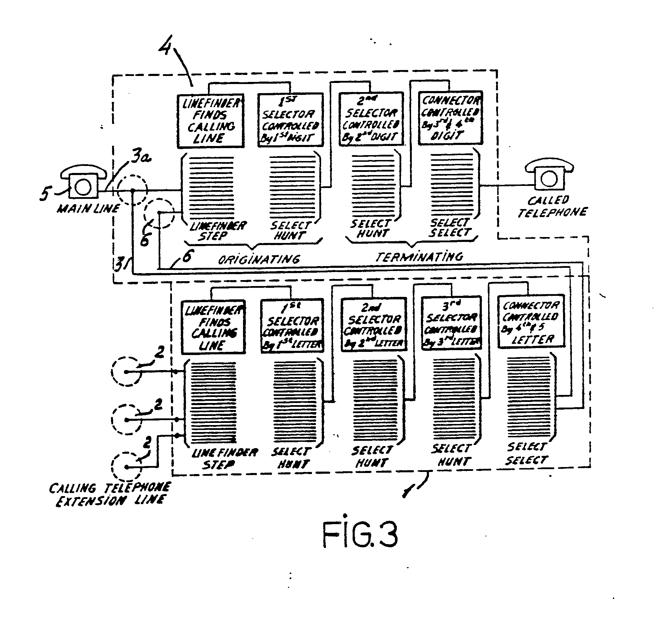

Figure 3 illustrates an example of the switching system comprising a step-by-step switching system 1. The difference between this step-by-step switching and the known switching system lies in that it does not operate on decimal numbers alone but operates on alpha-numerals with the letters Q and Z omitted. The switching system operates as follows:

When the telephone instrument is plugged into a connection point 2, the linefinder seeks a free line. If the secret sign which initially connects the subscriber to his connection in the exchange is, for example, SESAM, he begins by selecting the letter S with the dial or keyboard equipped with the letters of the alphabet. When the letter S is dialed, the first selector seeks the level S; when the letter E is dialed, the second selector seeks the level E; when the letter S is selected, the third selector seeks the level S. Then, when the letter A is dialed, a connector is brought to its corresponding position and finally, when the letter M is dialed, the connector is brought to its corresponding position. If this is a valid secret sign, the subscriber reaches his own ordinary telephone exchange line. He then selects the desired telephone number in the usual way, using the dial or keyboard equipped with digits. The subscriber may also carry out the same procedure from telephone instruments or connecting points.

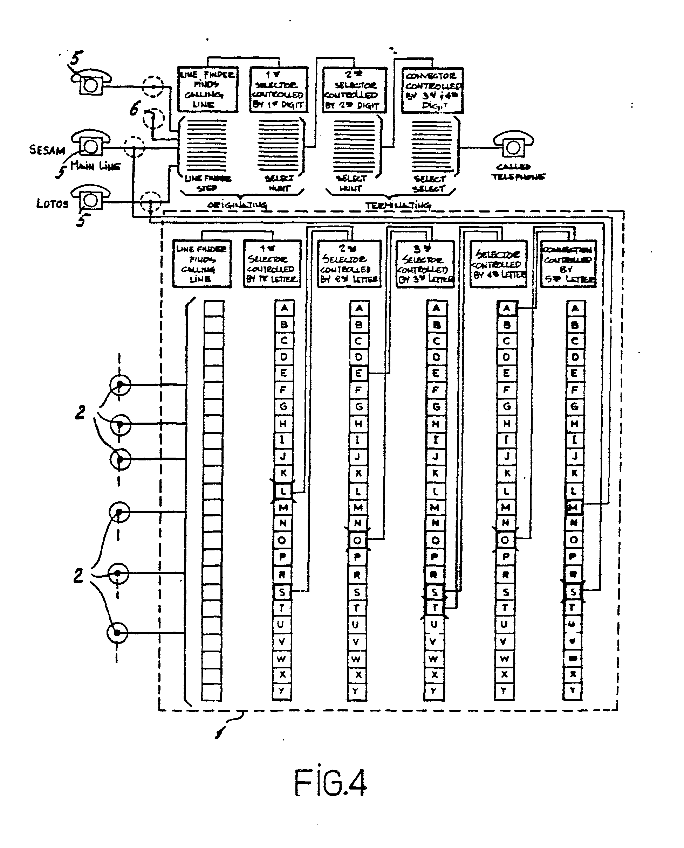

Referring now to Figure 4, there is shown in another way the step-by-step switching system of Figure 3. It shows how to connect connection point 2 to ordinary telephone exchange line in the telephone exchange by means of the signs SESAM and LOTOS which enables a user to dial through to another subscriber. The sample described before has been put together out of words with 5 letters. If one increases the number of selectors until 15 or 20 the secret sign could be put together to a complete sentence which one can well bear in mind. Then would arise trillions of variations for the secret signs which nobody could guess or find by chance. For military purposes by such or a similar method secret signs are being put together which the enemy cannot decode. What the hostile counter intelligence cannot do a sole user of the telphone system will not bring about more than ever.

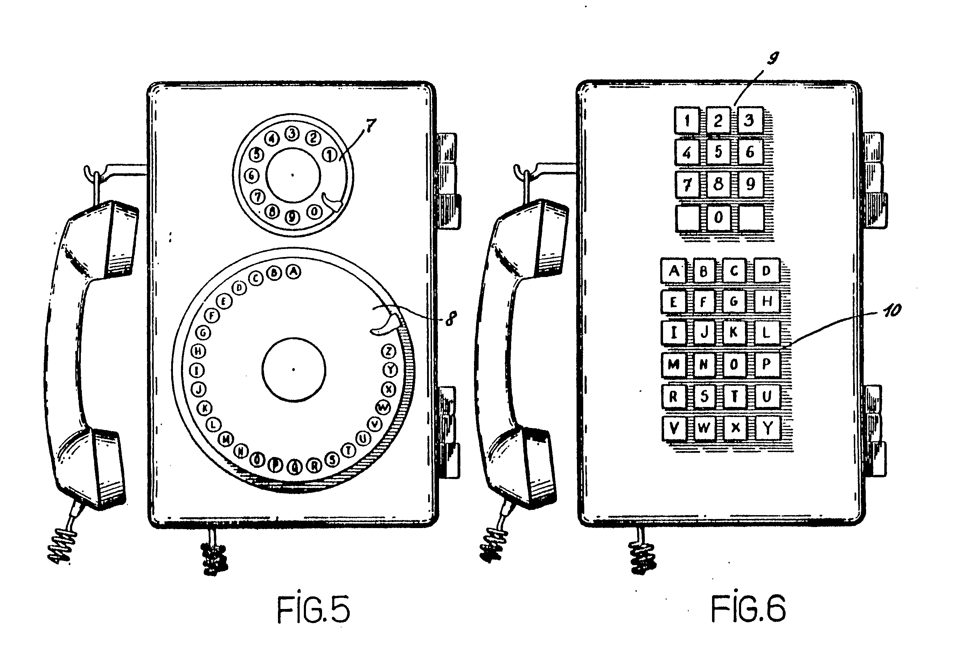

Figure 5 illustrates a telephone instrument having two dials, one dial 7 carrying the usual digits 1 to 9 and zero, and the other dial 8 carrying the 26 letters of the alphabet. The letter dial is used to compose the secret sign and the number dial to compose the number of a subscriber to be called.

Figure 6 illustrates a telephone instrument having a keyboard 9 carrying the usual digits 1 to 9 and zero and a keyboard 10 carrying 24 letters of the alphabet in four rows. The letter keyboard is used to compose the secret sign and the digit keyboard to compose the subscriber number.

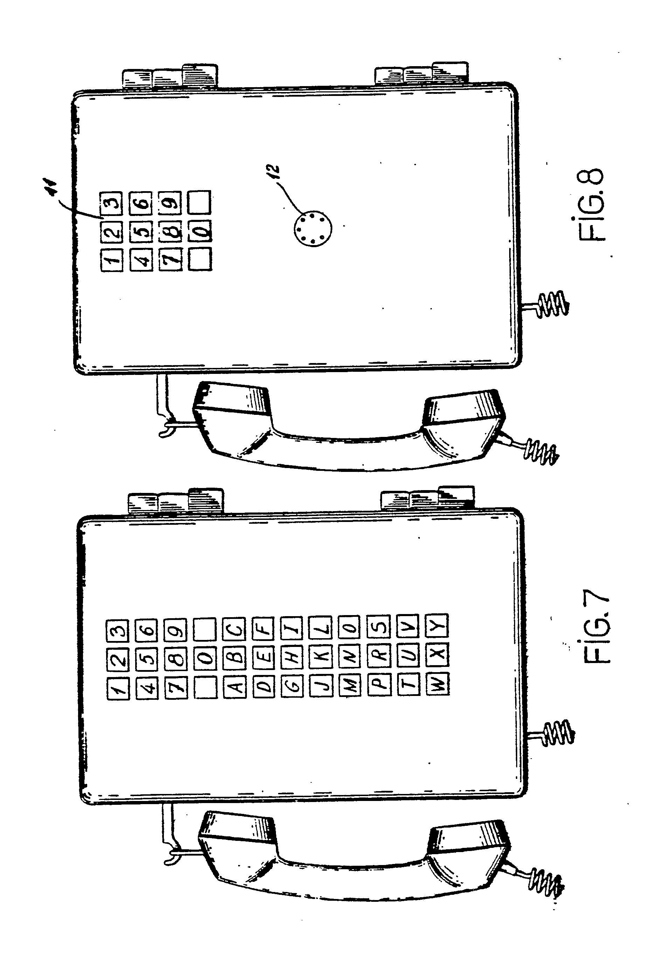

Figure 7 illustrates a telephone instrument as in Figure 6 also having two keyboards, the difference being that in this case the letter keyboard is arranged in three rows.

Figure 8 illustrates a telephone instrument having a keyboard 11 with the usual digits 1 to 9 and zero and a socket 12 for a keyboard with letters, or some other kind of a pulse generator. The subscriber may carry the second keyboard or another pulse generator on his person and when using the new telephone system he may plug it into the telephone instrument and compose first of all the secret sign and then dial the telephone number to be called.

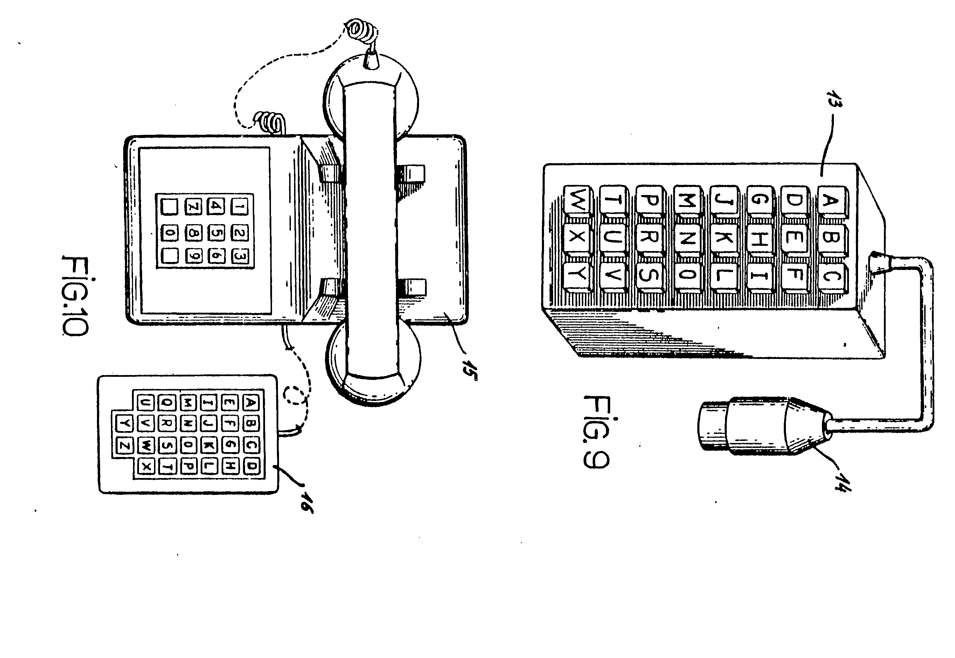

Figure 9 illustrates a keyboard 13 accommodated in a housing and equipped with a plug 14. This keyboard may be connected to the telephone instrument illustrated in Figure 8.

Figure 10 illustrates a table telephone 15 of known design which is connected to a keyboard 16 carrying 26 letters. The letter keyboard is used first of all to compose the secret sign, after which the telephone number is selected.

Figure 11 illustrates a portable telephone instrument equipped with two keyboards which may be plugged in with a plug 17 into connecting points connected to the new switching system. The letter keyboard 18 is used to compose the secret sign first of all, after which the digit keyboard 19 is used to select the telephone number to be called.

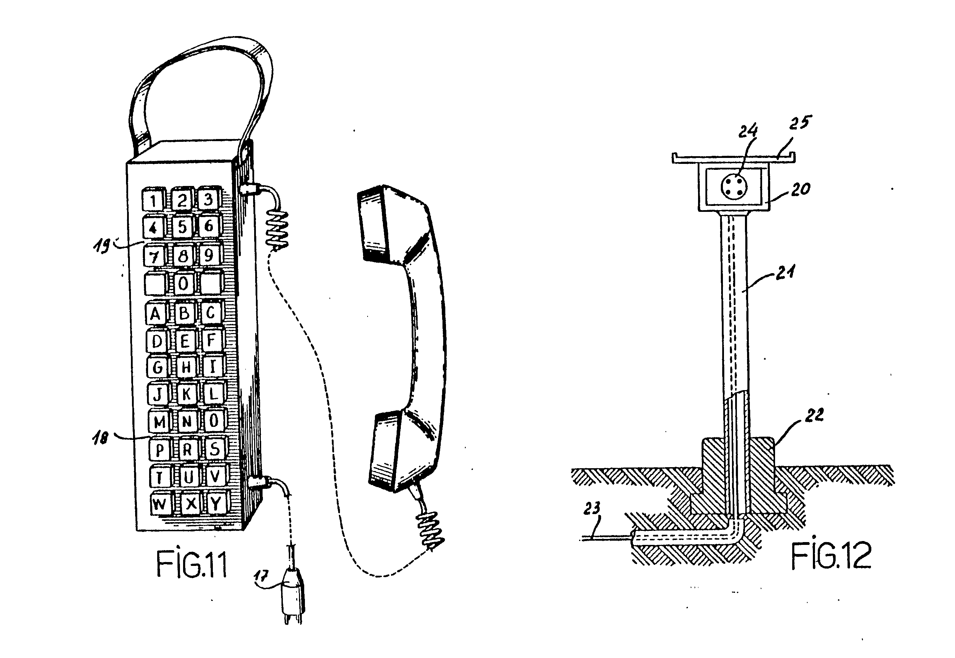

Figure 12 illustrates a connection box 20 fitted to a post 21 which is held in the ground by means of a cement cylinder 22. The line 23 from the switching system is connected to the jack socket 24 which is protected from the elements by a small housing. A plate 25 is mounted on the housing, upon which a portable telephone instrument may be placed.

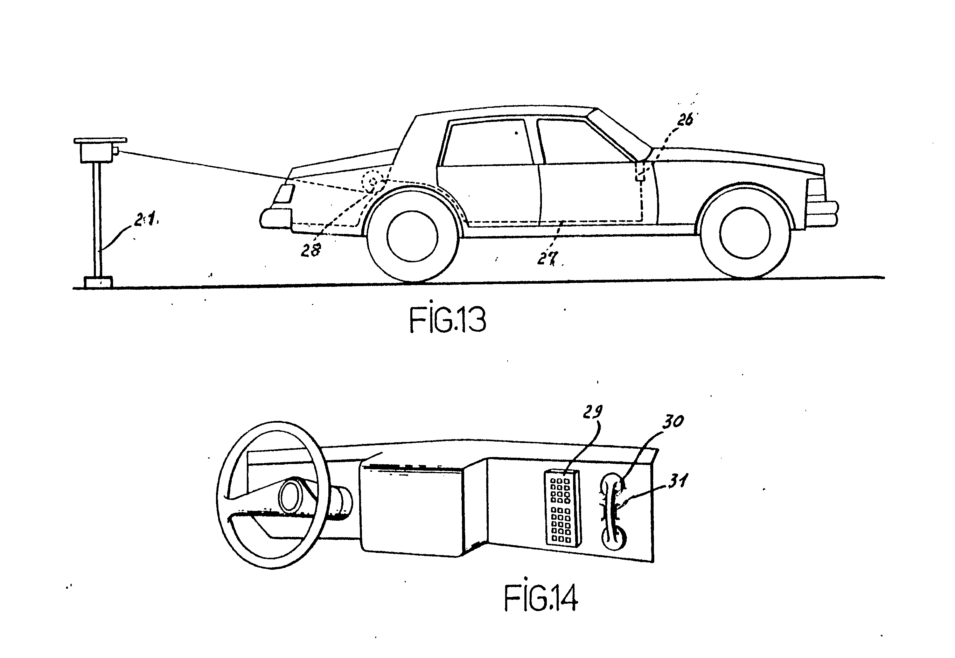

Figure 13 illustrates diagrammatically a vehicle in which a telephone instrument 26 is arranged, preferably incorporated into the dashboard. A line 27 runs from the telephone instrument to a drum 28, preferably accommodated in the trunk upon which the telephone line is wound. When the vehicle has been parked in the vicinity of a telephone post 21, the end of this line, which is fitted with a plug, may be inserted into the jack socket in the connection box. The said vehicle is thus converted into a telephone booth in which the caller may be seated comfortably while making his calls.

Figure 14 illustrates the dashboard of a vehicle with the telephone instrument 29 incorporated. The receiver 30 is pressed into a clamp 31 and is thus securely held while the vehicle is in motion.

## Claims

1. A telephone switching system for connecting a movable telephone Instrument (A,B,C) of a telephone network subscriber at any selected one of a plurality of connection points to his telephone exchange through an ordinary telephone exchange line, each of said connection points being disposed remote from every other connection point and remote from the position of his ordinary residential or commercial telephone instrument, wherein

said telephone switching system comprises:

an ordinary telephone exchange line dedicated to the subscriber,

at least one movable telephone instrument in possession of the said subscriber fitted with a plug suitable for attachment to a plug socket at the connection points,

means arranged at said movable telephone instrument as well as in said telephone exchange to effect connection between any one of said connection points with the said dedicated ordinary exchange line of the subscriber in response to the transmission of a secret sign dedicated to the subscriber,

whereby said movable telephone instrument plugged into a socket of any one of the connection points becomes an extension to the said dedicated ordinary telephone exchange line of the subscriber.

2. A telephone switching system as defined in claim 1 modified in that the subscriber posseses only a movable telephone instrument — without a residential or commercial telephone instrument — but nevertheless with a dedicated personal telephone exchange line in a local telephone network.

3. A telephone switching system according to claims 1 or 2 wherein existing ten digit telephone dials or keyboards may be used both for transmitting said secret sign dedicated to the subscriber in order to connect the movable telephone instrument plugged in any one of said connection points with his personal telephone exchange line as well as for selecting the telephone number of another subscriber.

4. A telephone switching system as defined in claim 1 wherein said means arranged at said movable telephone instrument to effect connection between any one of said connection points with the said dedicated ordinary exchange line of the subscriber in response to the transmission of a secret sign dedicated to the subscriber, includes a member selected from the group of dials, keyboards, photoelectric cells, electron beams, magnetic tapes or phonograph records.

5. A telephone switching system according to claim 1 and wherein said means to effect connection between a connection point and a ordinary exchange line is accommodated in a separate housing and is provided with means which allows it to be plugged into said telephone instrument.

6. A telephone switching system according to claim 5 wherein said telephone instrument has means for connecting said means to effect connection into said telephone instrument.

7. A telephone switching system as defined in claim 1 wherein at least some of said telephone instruments are arranged in the instrument panel of a respective car with a connecting cable wound on a drum, whereby said telephone instrument can be plugged into any one of the said connecting points.

8. A telephone switching system as defined in claim 1 or claim 2 wherein said connection point is comprised of a jack and said telephone instrument is a portable telephone instrument equipped with at least one pulse generator and adapted to be plugged into said jack for connection with said telephone exchange.

## Revendications

1. Un système de commutation téléphonique pout relier un téléphone mobile (A, B, C) d'un réseau téléphonique en un point quelconque choisi parmi lusieurs points à l'échange téléphonique d'un souscripteur en passant par une ligne de commutation étant éloigné des autres points de commutation et de l'endroit ou se situe son propre téléphone résidentiel ou commercial, caractérisé en ce que ledit système de commutation téléphonique comprend:

Une ligne ordinaire d'échange téléphonique attribué au souscripteur,

au moins un téléphone mobile en possession dudie souscripteur equipé d'une fiche destiné à être fixé à une douille aux points de commutation;

des moyens prévus dans ledit téléphone mobile de même que dans l'échange téléphonique pour réaliser un lien entre l'un quelconque des points des commutation avec ladite ligne ordinaire d'échange téléphonique attribuée au souscripteur, de façon à ce que ledit téléphone mobile relié à la douille en un point quelconque de commutation devienne une extension de la ligne d'échange téléphonique attribué a dit souscripteur.

2. Un système de commutation tel que défini dans la revendication 1, modifié pour que le souscripteur possède uniquement un téléphone mobile — sans téléphone résidentiel ou commercial — mais quand même avec und ligne d'échange téléphonique personelle dédiée au dit souscripteur dans réseau téléphonique local.

3. Un système de commutation selon revendications 1 ou 2 caractérisé en ce que des cadrans ou clavier téléphonique à dix touches connue peuvent être utilisée à la fois pour transmettre ledit signe secret attribué au souscripteur de façon à relier le téléphone mobile branché à l'un quelconque des dits points de commutation afin de choisir le numéro de téléphone d'un autre souscripteur, de relier le téléphone mobile branché à l'un quelconque des dits points de commutation avec sa ligne d'échange téléphonique personelle de même qu'avec le numéro de téléphone choisi d'un autre souscripteur.

4. Un système de commutation selon la revendication 1, caractérisé en ce que les dits moyens prévue dans le téléphone mobile pour relier l'un quelconque des dits points de communication avec ladite ligne d'échange téléphonique attribuée au souscripteur en réponse à la transmission d'une signe secret attribué au souscripteur inclut un élément choisi dans le groupe comprenant des cadrans, des claviers, des cellules photoélectriques, des faisceaux électroniques, des éléments magnétiques ou des disques phonographiques.

5. Système de communication téléphonique selon la revendication 1, dans lequel lesdits moyens pour effectuer le lien entre un point de commutation et une ligne ordinaire d'échange téléphonique est prévu dans un bâti separé et est de moyens qui lui permettre d'être branché dans ledit téléphone.

6. Un système de commutation téléphonique selon la revendication 5, dans lequel ledit téléphone comprend des moyens pour relier lesdits moyens pour effectuer la liaison avec ledit téléphone.

7. Un système de commutation téléphonique selon la revendication 1, caractérisé en ce que au moins certains desdits téléphones son disposés dans le paneau de bord d'un automobile au moyen d'un câble enroulé sur un rouleau avec lequel le téléphone mobile dits est embrayable entre l'un quelconque des points de commutation.

8. Un système de commutation téléphonique selon les revendications 1 ou 2 entre celuis le point de commutation dite est un élément d'une boite de contact et le téléphone dit est un téléphone mobile, qui est equipée au moins avec un impuls transmetteur et est prévue pour insérer en le boite de contact dit pour connecter avec l'échange téléphonique dite.

**Patentansprüche**

1. Fernsprechvermittlungssystem zum Verbinden eines beweglichen Telefon-Apparates (A,B,C) eines Fernsprech-Netz-Teilnehmers an irgendeinem ausgewählten einer Mehrzahl von Anschluß-Punkten mit einem Telefonamt durch eine gewöhnliche Amtsleitung, wobei sich jeder dieser Anschluß-Punkte von jedem anderen Anschluß-Punkt und von der Stelle seines gewöhnlichen Privat- oder Geschäfts-Apparates entfernt befindet, wobei dieses Fernsprechvermittlungssystem besteht aus einer gewöhnlichen Telefon-Anschlußleitung des Teilnehmers, mindestens einem beweglichen Telefon-Apparat im Besitz des Teilnehmers, der mit einem Stecker ausgerüstet ist zum Einführen in eine Steckdose an den Anschluß-Punkten, Mitteln, die sowohl an dem beweglichen Telefon-Apparat als auch in dem erwähnten Telefonamt angeordnet sind zum Herstellen einer Verbindung zwischen irgend einem der erwähnten Anschluß-Punkte und der erwähnten Anschluß-Leitung des Teilnehmers als Reaktion auf die Übertragung eines dem Teilnehmer zugeteilten Geheimsignals, wodurch der erwähnte bewegliche Telefon-Apparat eingesteckt in die Steckdose irgendeines Anschluß-Punktes zu einer Nebenstelle zu der normalen Telefon-Anschlußleitung des Teilnehmers wird.

2. Fernsprechvermittlungssystem nach Anspruch 1 mit der Abwandlung, daß der Teilnehmer nur einen beweglichen Telefon-Apparat besitzt — ohne einen privaten oder geschäftlichen Telefon-Apparat zu besitzen, jedoch mit einer ihm zugeteilten persönlichen Telefon-Anschlußleitung in einem örtlichen Telefon-Netz.

3. Fernsprechvermittlungssystem nach den Ansprüchen 1 oder 2, bei dem vorhandene 10-ziffrige Telefon-Wählscheiben oder -Tastaturen benutzt werden können, sowohl zum Übertragen des dem Teilnehmer zugeteilten Geheim-Signals zum Verbinden des beweglichen Telefon-Apparates, der in irgendeinen der erwähnten Anschluß-Punkte eingesteckt ist, mit seiner persönlichen Anschluß-Leitung, als auch zum Wählen der Telefon-Nummer eines anderen Teilnehmers.

4. Fernsprechvermittlungssystem nach Anspruch 1, bei dem an dem erwähnten beweglichen Telefon-Apparat Mittel angebracht sind zum Herstellen der Verbindung zwischen irgendeinem der erwähnten Anschluß-Punkte mit der erwähnten, dem Teilnehmer zugeteilten gewöhnlichen Amtsleitung als Reaktion auf die Übertragung eines dem Teilnehmer zugeteilten Geheim-Signals, das ein Bauteil enthält, ausgewählt aus der Gruppe von Wähl-Scheiben, -Tastaturen, photoelektrischen Zellen, Elektronen-Strahlen, Magnetbändern oder Schall-Platten.

5. Fernsprechvermittlungssystem nach Anspruch 1, bei dem die erwähnten Mittel zum Herstellen der Verbindung zwischen einem Anschluß-Punkt und einer normalen Amtsleitung in einem gesonderten Gehäuse untergebracht und Mittel vorgesehen sind, die es erlauben, an den erwähnten Telefon-Apparat angeschlossen zu werden.

6. Fernsprechvermittlungssystem nach Anspruch 5, bei dem der erwähnte Telefon-Apparat Mittel aufweist zum Verbinden der erwähnten Mittel, um eine Verbindung zu dem erwähnten Telefon-Apparat herzustellen.

7. Fernsprechvermittlungssystem wie in Anspruch 1 beschrieben, bei dem mindestens einige der erwähnten Telefon-Apparate im Instrumentenbrett eines entsprechenden Kraftfahrzeugs untergebracht sind, mit einem auf einer Rolle aufgewickelten Verbindungs-Kabel, mit dem der erwahnte Telefon-Apparat in jeden beliebigen der erwähnten Anschluß-Punkte eingeschaltet werden kann.

8. Fernsprechvermittlungssystem wie in den Ansprüchen 1 oder 2 beschrieben, bei dem der erwähnte Anschluß-Punkt Bestandteil einer Steckdose und der erwähnte Telefon-Apparat ein tragbarer Telefon-Apparat ist, der mit wenigstens einem Impulsgeber ausgerüstet und vorgesehen ist zum Einstecken in die erwähnte Steckdose zum Verbinden mit dem erwähnten Telefon-Amt.

0 009 684

TELEPHONE EXCHANGE

FIG.1

MAIN LINE

CALLED TELEPHONE

SWITCHING SYSTEM

MOVABLE TEL.

A   B   C        D

FIG. 2

FIG.3

FIG.4

FIG.5

FIG.6

FIG.7

FIG.8

FIG. 9

FIG.10

FIG.11

FIG.12

FIG.13

FIG.14